# EUROPÄISCHE PATENTSCHRIFT

(11) **EP 0 931 976 B1**
(45) Veröffentlichungstag und Bekanntmachung des Hinweises auf die Patenterteilung: **21.08.2002**
(21) Anmeldenummer: 98122798.6
(22) Anmeldetag: 01.12.1998
(51) Int. Cl.: F21V 8/00

(54) **Anordnung zum gleichmässigen Be- bzw. Ausleuchten einer Fläche zum Anzeigen von Informationen**
Uniform illumination device for flat informations display
Dispositif d'éclairage uniforme pour un panneau d'affichage d'informations

(30) Priorität: 21.01.1998 DE 19802165
(43) Veröffentlichungstag der Anmeldung: 28.07.1999
(73) Patentinhaber: Vossloh System-Technik Karlsfeld GmbH, 85757 Karlsfeld (DE)
(72) Erfinder: Malcherek, Werner, Dipl.-Ing., 85221 Dachau (DE)
(74) Vertreter: Grape, Knut, Dipl.-Ing.

(56) Entgegenhaltungen:
- EP-A- 0 703 405
- EP-A- 0 732 679
- DE-U- 29 508 596
- FR-A- 2 178 444
- FR-A- 2 722 321
- GB-A- 2 276 751
- US-A- 2 290 278

## Beschreibung

Die Erfindung betrifft eine Anordnung zum gleichmäßigen Be- bzw. Ausleuchten einer lichtundurchlässigen Fläche zum Anzeigen von Informationen im allgemeinen und eine Anordnung zum gleichmäßigen Be- bzw. Ausleuchten von Zifferblättern großer Uhren, wie sie im Bereich von Bahnhöfen, Flughäfen und Haltestellen des öffentlichen Personenverkehrs, in U-Bahn-Stationen, an Bus-Haltestellen und ähnlichen Plätzen zur Anzeige der aktuellen Uhrzeit in analoger Form Verwendung finden, von Verkehrsschildern und sonstigen Displayanordnungen zum Anzeigen von Informationen im besonderen.

Im öffentlichen Bereich sind einseitige und doppelseitige Uhren mit Zifferblattdurchmessern größer als 200 mm zum Anzeigen der aktuellen Zeit sehr häufig zu finden. Diese können mit Auf- oder Durchlicht beleuchtet sein.

Bei Verwendung von farbigen und daher oft undurchsichtigen Zifferblättern scheidet die Auflichttechnik mit vorderseitig eingebauter Ringleuchtstofflampe aufgrund der Vielfalt der benötigten Uhrendurchmesser und der hierzu erforderlichen Einbautiefen aus. Aber selbst wenn es für den benötigten Uhrendurchmesser eine vom Durchmesser her geeignete Ringleuchtstofflampe gäbe, wäre aufgrund der Abstrahlcharakteristik der Leuchtstofflampe ein beträchtlicher Abstand von der Lampenringebene bis zur Ebene des Zifferblattes notwendig, um letzteres homogen auszuleuchten. Dies würde nicht nur zur Erhöhung der Gehäusetiefe, sondern vor allem zur Einengung des Sichtwinkels führen. Gleichzeitig würde die geringe Leuchtdichte der Ringleuchtstofflampe eine unzureichende Ausleuchtung des Zifferblattes ergeben.

Milchig durchscheinende (transluszente) bzw. durchsichtige (transparente) Zifferblätter mit aufgedruckten Stunden- und Minutenzeichen werden oft mit Hilfe einer Ringleuchtstofflampe von der Rückseite des Zifferblattes aus durchschienen und damit ausgeleuchtet. Nachteilig ist bei dieser Durchlichttechnik, daß nur helle transluszente bzw. transparente Zifferblätter verwendbar sind, wobei es schwierig ist, Farbgleichheit zwischen der Farbe des Zifferblattes im Tagbetrieb (Durchlicht ausgeschaltet) und im Nachtbetrieb (Durchlicht eingeschaltet) zu erreichen. Meist treten Farbänderungen auf, die bei Einführung derartiger Uhren in die Innen- und Außen-Architektur moderner Bahnhöfe und Flughäfen usw. nicht erwünscht sind.

Ein weiterer Nachteil der Durchlichttechnik ist, daß Zifferblätter ungleichmäßig ausgeleuchtet werden. Darüber hinaus bilden sich auf der Vorderseite die Umrisse des Uhrwerkes als Schatten ab.

Beispielsweise ist in der GB-A-2 276 751 eine Anordnung zum Anzeigen von Informationen mit einer Vielzahl von emittierenden Elementen beschrieben, die zueinander jeweils etwa gleich beabstandet angeordnet sind. Bei dieser Anordnung wird keine lichtundurchlässige Fläche zum Anzeigen von Informationen be- bzw. ausgeleuchtet. Die Fläche ist vielmehr als ein Illuminator ausgebildet, der einer an sich bekannten LCD-Anzeige rückseitig zugeordnet ist. Der rückseitig angebrachte Illuminator, der als plattenförmiger Körper ausgestaltet ist und aus transparentem oder lichtdurchlässigem Material besteht, soll dabei die LCD-Anzeige be- bzw. ausleuchten. Um das von lichtemittierenden Dioden ausgestrahlte Licht durch den plattenförmigen Körper hinter der LCD-Anzeige hindurchzuleiten, ist dessen Rückseite mit einer zum Beispiel weißen Schicht versehen.

Weiterhin offenbart die EP-A-0 732 679 eine Displayanordnung für Instrumente in Kraftfahrzeugen. Dabei ist eine scheibenförmige oder etwa plattenförmige Streulichtführung aus transparentem Material vorgesehen, welcher lichtemittierende Elemente zugeordnet sind. Das von den lichtemittierenden Elementen erzeugte Licht durchflutet die Streulichtführung, auf deren Vorderseite eine Maske mit den anzuzeigenden Informationen angeordnet ist.

Gleiches gilt schließlich auch für die Anordnung nach dem DE 295 08 596 U1 zur Beleuchtung von Motiv- oder Informationsträgern, welche einen ganz oder teilweise transparenten und/oder lichtdurchlässigen Trägerkörper aufweisen.

Ausgehend vom Stand der Technik liegt der Erfindung daher die Aufgabe zugrunde, eine Anordnung zum gleichmäßigen Be- bzw. Ausleuchten einer lichtundurchlässigen Fläche zum Anzeigen von Informationen und vorzugsweise eines Zifferblattes einer Uhr, zur Verfügung zu stellen, welche unter anderem die vorgenannten Nachteile vermindert bzw. beseitigt, mithin ein gleichmäßiges Be- bzw. Ausleuchten einer lichtundurchlässigen Fläche zum Anzeigen der Informationen ermöglicht, konstruktiv besonders einfach und zuverlässig sowie kleinbauend ausgestaltet ist und nicht zuletzt aufgrund dessen eine größtmögliche Sichtfläche aufweist.

Diese Aufgabe wird auf überraschend einfache Weise durch die Merkmale des Anspruchs 1 gelöst.

Durch die erfindungsgemäße Ausbildung der Anordnung zum gleichmäßigen Be- bzw. Ausleuchten einer lichtundurchlässigen Fläche zum Anzeigen von Informationen durch eine Vielzahl von lichtemittierenden Elementen, die in und/oder geringfügig oberhalb der Ebene der zu beleuchtenden bzw. auszuleuchtenden Fläche und in einem randseitigen Bereich der zu beleuchtenden bzw. auszuleuchtenden Fläche zueinander jeweils etwa gleich beabstandet angeordnet sind, derart, daß das abzustrahlende Licht im wesentlichen auf den mittigen Bereich der zu beleuchtenden bzw. auszuleuchtenden Fläche gerichtet ist, läßt sich die gesamte Fläche gleichmäßig be- bzw. ausleuchten. Eine solche besonders gleichmäßige Be- bzw. Ausleuchtung ist dabei selbst bei zum Beispiel dunkelfarbigen, wie schwarzen oder marineblauen, Flächen sichergestellt. Des weiteren läßt sich durch die erfindungsgemäße Ausgestaltung auch eine Anordnung erhalten, die konstruktiv ausgesprochen einfach und kompakt, zuverlässig sowie kleinbauend ausgebildet ist.

So wird der Abstand zwischen transparenter Abdeckung, welche in aller Regel zum Schutz gegen Schmutz und äußerer Manipulation vorgesehen ist, und der Fläche zum Anzeigen von Informationen insbesondere dadurch, daß die lichtemittierenden Elemente in und/oder geringfügig oberhalb der Ebene der zu beleuchtenden bzw. auszuleuchtenden Fläche angeordnet sind, wesentlich verkleinert. Damit einhergehend läßt sich die gesamte Einbau- bzw. Gehäusetiefe der erfindungsgemäßen Anordnung gegenüber jenen im Stand der Technik bekannten Konstruktionen wesentlich verringern. Dies bringt schließlich zugleich den Vorteil mit sich, den optischen Eindruck der Anordnung nach der Erfindung zu verbessern und eine größtmögliche Sichtfläche zu gewährleisten, da die Fläche zum Anzeigen der Informationen bis nahe an die transparente Abdeckung heranreichen kann. Der Sichtwinkel, unter dem der Betrachter die Fläche zum Anzeigen der Informationen sieht, wird daher kaum eingeengt.

Weitere vorteilhafte Einzelheiten der erfindungsgemäßen Anordnung sind in den Ansprüchen 2 bis 19 beschrieben.

Durch die konstruktiven Maßnahmen nach Anspruch 2, wonach weitere lichtemittierende Elemente in einem zentralen Bereich der zu beleuchtenden bzw. auszuleuchtenden Fläche, der sich zwischen dem randseitigen Bereich einerseits und dem mittigen Bereich bzw. der etwaigen Mitte andererseits erstreckt, insbesondere zueinander jeweils gleich beabstandet, angeordnet sind, läßt sich die Be- bzw. Ausleuchtung der Fläche noch weiter vergleichmäßigen. Zugleich kann auf diese Weise auch die Leuchtdichte an die jeweils anzutreffenden Gegebenheiten individuell angepaßt werden.

Von großer Bedeutung für ein gleichmäßiges Be- bzw. Ausleuchten der Fläche der erfindungsgemäßen Anordnung sind auch die Maßnahmen des Anspruchs 3, wonach die lichtemittierenden Elemente in Formen um den mittigen Bereich um die Zeigerachse bzw. die etwaige Mitte der Fläche angeordnet sind, welche auf die zu beleuchtende bzw. auszuleuchtende Fläche im Hinblick auf deren Gestalt abgestimmt ist. Durch eine derartige Anordnung der lichtemittierenden Elemente ist eine weitere Vergleichmäßigung und damit Verbesserung der Be- bzw. Ausleuchtung der Fläche sichergestellt.

Entsprechend den Merkmalen des Anspruchs 4 sind die lichtemittierenden Elemente dabei vorzugsweise im wesentlichen in geometrischen Formen, wie beispielsweise auf Umrissen geometrischer Figuren, insbesondere eines Kreises, Dreiecks, Quadrats, Vierecks oder sonstigen Polygons, einer Ellipse oder dergleichen, um den mittigen Bereich der zu beleuchtenden bzw. auszuleuchtenden Fläche angeordnet.

Darüber hinaus liegt es im Rahmen der Erfindung, daß die lichtemittierenden Elemente das zu emittierende Licht nach Anspruch 5 parallel und/oder in einem Winkel zur Ebene der zu beleuchtenden bzw. auszuleuchtenden Fläche auf die Fläche abstrahlen. Auf diese Weise läßt sich die benötigte Leuchtdichte entsprechend der Größe der zu beleuchtenden bzw. auszuleuchtenden Fläche im Zusammenwirken mit der Anzahl von lichtemittierenden Elementen individuell einstellen.

Von ganz besonders großer Bedeutung für eine ausgesprochen gleichmäßige und einfache, kompakte und zuverlässige, damit einhergehend kostengünstige Bauweise sowie eine gleichmäßige Verteilung der Leuchtdichte der einzelnen lichtemittierenden Elemente sind die Maßnahmen des Anspruchs 6, wonach die licht-emittierenden Elemente jeweils als lichtleitende Fasern ausgebildet sind, deren jeweiliges eine Ende mit einer Lichtquelle wirksam verbunden und deren jeweiliges andere Ende zur Abstrahlung des von der Lichtquelle erzeugten und von der lichtleitenden Faser übertragenen Lichtes der zu beleuchtenden bzw. auszuleuchtenden Fläche zugeordnet ist. Die Leuchtdichte auf der Fläche ist dabei proportional zum Lichtstrom, den die einzelnen lichtleitenden Fasern führen. Die Leuchtdichte kann dabei in weiten Bereichen an aktuelle Einsatzanforderungen angepaßt werden, indem beispielsweise die Leistung der Lichtquelle vergrößert und/oder die Anzahl der lichtemittierenden Elemente erhöht wird.

Vorzugsweise bestehen die lichtleitenden Fasern nach Anspruch 7 aus Kunststoff, Glas oder dergleichen. Sie ermöglichen eine weitgehend verlustfreie und zuverlässige Übertragung des abzustrahlenden Lichtes unter gleichzeitig geringen Kosten.

Zusätzlich ist es von besonderem Vorteil in diesem Zusammenhang, die anderen, lichtabstrahlenden Enden der lichtleitenden Fasern gemäß Anspruch 8 jeweils anzufasen, d.h. schräg abzuschneiden oder dergleichen.

Des weiteren liegt es im Rahmen der Erfindung entsprechend Anspruch 9, die Lichtquelle als Kaltlichtquelle, insbesondere als Halogenlampe mit parabolischem Reflektor, auszubilden. Bei Verwendung einer solchen Kaltlichtquelle zur Be- bzw. Ausleuchtung der Fläche lassen sich Farbveränderungen der be- bzw. ausgeleuchteten Fläche vermeiden, und zwar unabhängig vom Tages- bzw. Nachtbetrieb der Anordnung nach der Erfindung.

Entsprechend den Maßnahmen nach Anspruch 10 ist/sind zwischen der Lichtquelle und den lichtleitenden Fasern zweckmäßigerweise eine Fokussiereinrichtung und gegebenenfalls ein Kondensor zur parallelen Ausrichtung der Lichtstrahlen angeordnet.

In alternativer oder kumulativer Ausgestaltung der lichtemittierenden Elemente, die als lichtleitende Fasern ausgestaltet sind, ist es ebenso denkbar, die lichtemittierenden Elemente entsprechend den Merkmalen der Ansprüche 11 und 12 als Leuchtdioden (LEDs) oder Glühlämpchen auszubilden, die miteinander zu sogenannten Lichterketten verdrahtet und mit einer Stromquelle verbunden sind. Obschon sich derartig ausgestaltete lichtemittierende Elemente in der Praxis bereits hinreichend bewährt haben, haben sich deren Investitions- und Wartungskosten nicht zuletzt aufgrund einer nur begrenzten Lebensdauer im Vergleich zu lichtleitenden Fasern ganz allgemein als höher herausgestellt.

Nach Anspruch 13 sind die lichtemittierenden Elemente zweckmäßigerweise mit Fixierelementen an der zu beleuchtenden bzw. auszuleuchtenden Fläche im wesentlichen auf deren mittigen Bereich bzw. deren etwaigen Mitte ausgerichtet angebracht, wodurch sich zusätzlich eine individuelle, damit verbesserte Einstellmöglichkeit für eine besonders gleichmäßige Be- bzw. Ausleuchtung der Fläche durch die lichtemittierenden Elemente ergibt.

In einer noch weiteren Ausgestaltung der Erfindung können die lichtemittierenden Elemente nach den Merkmalen des Anspruchs 14 mit auf der zu beleuchtenden bzw. auszuleuchtenden Fläche befestigten und/oder sich über diese bewegenden Elementen zusammenwirken, die derart ausgebildet sind, daß das von den lichtemittierenden Elementen abgestrahlte Licht von der Fläche weg und hin zum Betrachter, beispielsweise diffus bzw. (zumindest teilweise) gerichtet in den Halbraum über der Fläche, ablenkbar ist. Auf diese Weise lassen sich Informationen hervorheben und somit deren Lesbarkeit zusätzlich verbessern.

In diesem Zusammenhang liegt es insbesondere im Rahmen der Erfindung, die auf der zu beleuchtenden bzw. auszuleuchtenden Fläche befestigten und/oder die über diese Fläche bewegten Elemente nach den Ansprüchen 15 bis 17 alternativ oder kumulativ prismen- oder dergleichen -artig auszugestalten, aus lichtleitendem Kunststoff oder ähnlichem Material auszubilden oder wenigstens teilweise mit einem fluoreszierenden Material zu beschichten.

Schließlich sind die Merkmale der Ansprüche 18 und 19, wonach die zu beleuchtende bzw. auszuleuchtende Fläche als Zifferblatt einer Uhr und die darauf befestigten und/oder darüber bewegten Elemente als Ziffern, Markierungen, wie Strichmarken, oder dergleichen bzw. als Zeiger der Uhr ausgebildet sind, von großem Interesse für die Erfindung.

Weitere Merkmale, Vorteile und Einzelheiten der Erfindung ergeben sich aus der nachfolgenden Beschreibung einiger bevorzugter Ausführungsformen der Erfindung sowie anhand der Zeichnungen. Hierbei zeigen:
- Fig. 1: eine Vorderansicht einer Ausführungsform einer erfindungsgemäß ausgebildeten Anordnung zum Be- bzw. Ausleuchten einer Fläche zum Anzeigen von Informationen in Form eines Zifferblattes einer Uhr,
- Fig. 2: eine teilweise geschnittene Draufsicht auf die Ausführungsform der erfindungsgemäß ausgebildeten Anordnung zum Be- bzw. Ausleuchten einer Fläche zum Anzeigen von Informationen in Form eines Zifferblattes einer Uhr entsprechend der Fig. 1,
- Fig. 3: eine schematische, teilweise auseinandergezogene Explosionsansicht einer Ausführungsform einer erfindungsgemäßen Anordnung zum gleichmäßigen Be- bzw. Ausleuchten einer Fläche zum Anzeigen von Informationen,
- Fig. 4: eine vergrößerte Teilansicht der Ausführungsform der erfindungsgemäß ausgebildeten Fläche zum Anzeigen von Informationen in Form eines Zifferblattes einer Uhr entsprechend Ausschnitt IV in Fig. 1,
- Fig. 5: eine vergrößerte Teilansicht der Ausführungsform der erfindungsgemäß ausgebildeten Anordnung zum Be- bzw. Ausleuchten einer Fläche zum Anzeigen von Informationen in Form eines Zifferblattes einer Uhr entsprechend Ausschnitt V in Fig. 2, und
- Fig. 6: eine schematische Darstellung einer Einzelheit einer Ausführungsform einer erfindungsgemäßen Anordnung zum Be- bzw. Ausleuchten einer Fläche zum Anzeigen von Informationen in Form eines Zifferblattes (nicht dargestellt) einer Uhr mit einem Zeiger.

Bei der nachfolgenden Beschreibung von verschiedenen Ausführungsbeispielen erfindungsgemäßer Anordnungen 10 zum gleichmäßigen Be- bzw. Ausleuchten einer lichtundurchlässigen Fläche 12 zum Anzeigen von Informationen sind einander entsprechende, gleiche Bauteile jeweils mit identischen Bezugsziffern versehen.

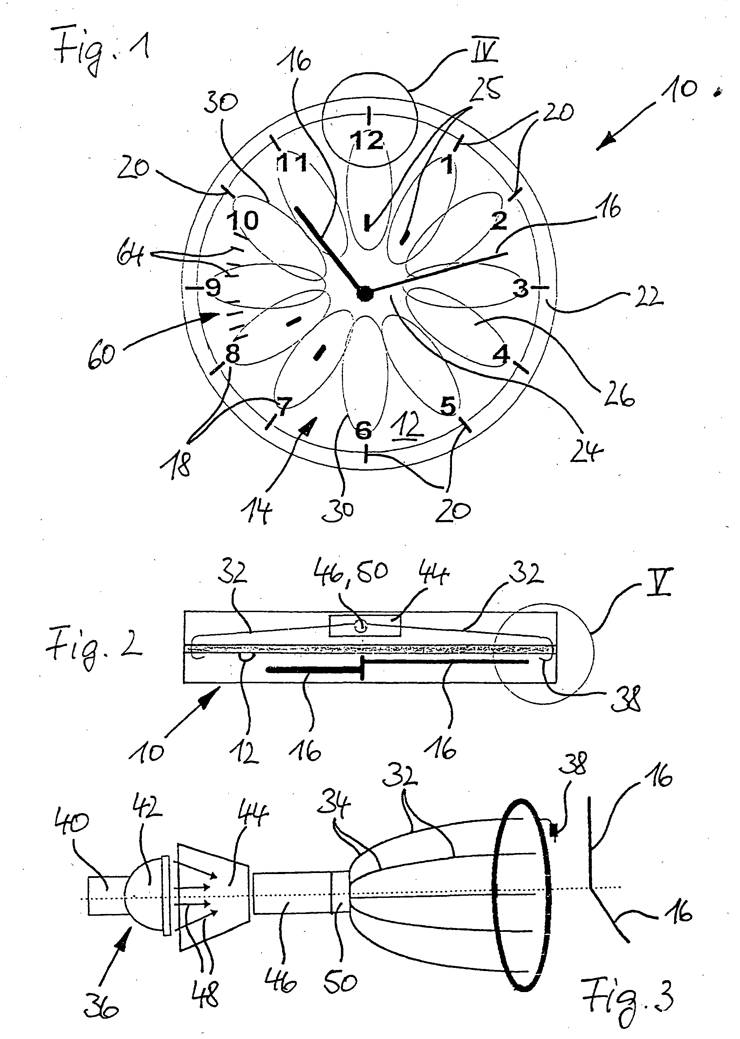

In der Fig. 1 ist eine Ausführungsform einer erfindungsgemäßen Anordnung 10 zum gleichmäßigen Be- bzw. Ausleuchten einer lichtundurchlässigen zum Beispiel dunkelfarbigen, Fläche 12 zum Anzeigen von Informationen dargestellt. Die Anordnung 10 nach der Erfindung eignet sich besonders zum Be- bzw. Ausleuchten eines als Fläche 12 vorgesehenen Zifferblattes 14 einer Uhr mit Zeigern 16 und Ziffern 18, die beispielsweise im Bereich von Bahnhöfen und Haltestellen des öffentlichen Personennahverkehrs, wie etwa U-Bahn-Stationen oder Bushaltestellen, sowie von Flughäfen oder sonstigen öffentlichen Einrichtungen installiert sind. Ebenso ist es möglich, die Anordnung nach der Erfindung zum Be- bzw. Ausleuchten von Verkehrsschildern oder sonstigen Displayanordnungen zum Anzeigen von Informationen, wie Anzeigetafeln, zu verwenden.

Die in der Fig. 1 dargestellte Ausführungsform der Anordnung 10 nach der Erfindung zum gleichmäßigen Be- bzw. Ausleuchten der Fläche 12 zum Anzeigen von Informationen bzw. des Zifferblattes 14 der Uhr umfaßt eine Vielzahl von lichtemittierenden Elementen 20. Die insgesamt 12 lichtemittierenden Elemente 20 sind in einem randseitigen Bereich 22 der zu beleuchtenden bzw. auszuleuchtenden Fläche 12 bzw. des Zifferblattes 14 der Uhr zueinander jeweils etwa gleich beabstandet angeordnet, und zwar derart, daß das abzustrahlende Licht im wesentlichen auf den mittigen Bereich bzw. die etwaige Mitte 24 der zu beleuchtenden bzw. auszuleuchtenden Fläche 12 bzw. des Zifferblattes 14 der Uhr gerichtet ist. Um eine jeweils gewünschte Leuchtdichte zu erreichen, kann die Anzahl von lichtemittierenden Elementen in entsprechender Weise beliebig erhöht, aber ebenso auch verringert werden.

Darüber hinaus ist es möglich, daß weitere lichtemittierende Elemente 25 in einem zentralen Bereich 26 der zu beleuchtenden bzw. auszuleuchtenden Fläche 12 bzw. des Zifferblattes 14 der Uhr zwischen dem randseitigen Bereich 22 und dem mittigen Bereich 24 angeordnet sind. Zur besseren Übersicht sind in der Fig. 1 nur einige dieser weiteren lichtemittierenden Elemente 25 dargestellt. Derartige weitere lichtemittierende Elemente 25 sind vorzugsweise ebenfalls zueinander jeweils etwa gleich beabstandet. Eine solche konstruktive Ausgestaltung bietet sich vorzugsweise bei sehr großen zu beleuchtenden bzw. auszuleuchtenden Flächen 12 bzw. Zifferblättern großer Uhren an.

Die lichtemittierenden Elemente 20 bzw. 25 sind entsprechend der Fig. 1 in Formen, wie beispielsweise auf geometrischen Umrissen, hier eines Kreises, um den mittigen Bereich bzw. die etwaige Mitte 24 der Fläche 12 bzw. des Zifferblattes 14 der Uhr angeordnet, die auf die Gestalt der zu beleuchtenden bzw. auszuleuchtenden Fläche 12 bzw. des Zifferblattes 14 der Uhr abgestimmt sind. Wenn die zu beleuchtende bzw. auszuleuchtende Fläche 12 bzw. das Zifferblatt 14 der Uhr entsprechend der Fig. 1 kreisförmig ausgestaltet ist, befinden sich die lichtemittierenden Elemente 20, 25 insoweit auch im wesentlichen auf einer Kreislinie - wie hier - im randseitigen Bereich 22 oder auch zusätzlich in einem zentralen Bereich 26. In entsprechender Weise können die lichtemittierenden Elemente 20, 25 im wesentlichen auch in anderen geometrischen Formen, wie zum Beispiel in Form eines Dreiecks, Quadrats, Vierecks oder sonstigen Polygons, Ellipse oder dergleichen, um den mittigen Bereich bzw. die etwaige Mitte 24 der zu beleuchtenden bzw. auszuleuchtenden Fläche 12 bzw. des Zifferblattes 14 der Uhr angeordnet sein (nicht im einzelnen dargestellt).

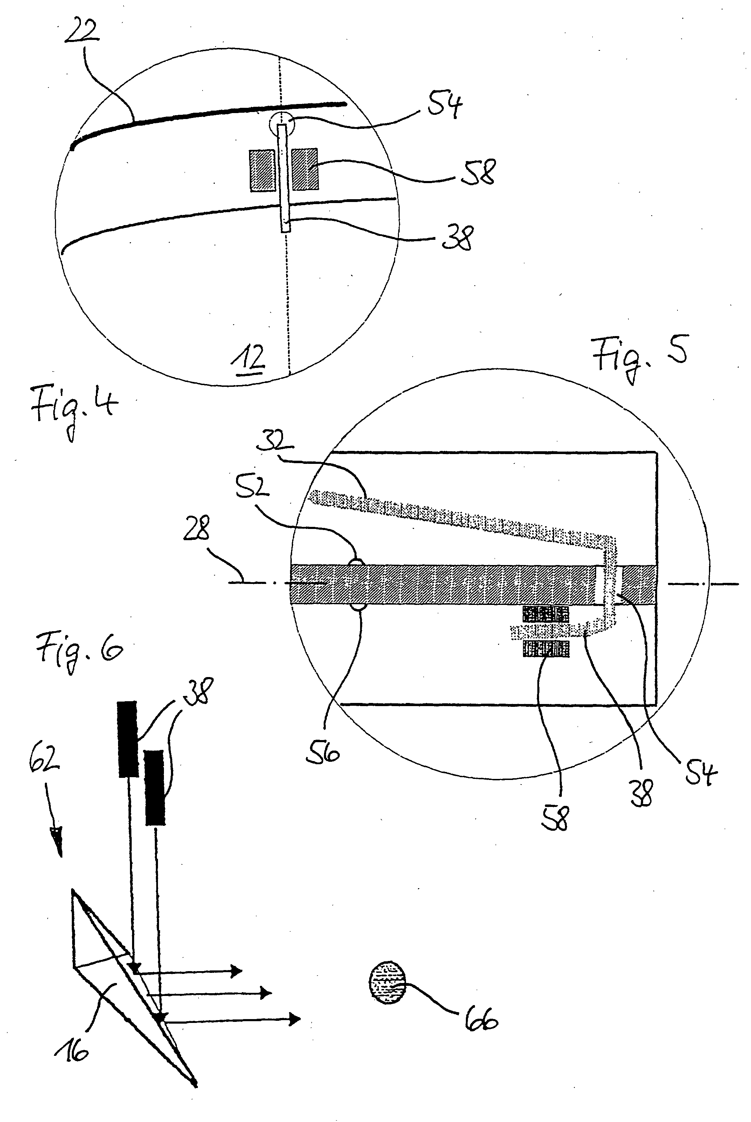

Wie insbesondere den Fig. 2 und 5 zu entnehmen ist, sind die lichtemittierenden Elemente 20 bzw. 25 in und/oder geringfügig oberhalb der Ebene 28 angeordnet, die senkrecht auf der Zeichnungsebene steht und die zu beleuchtende bzw. auszuleuchtende Fläche 12 bzw. das Zifferblatt 14 der Uhr aufspannt. Die lichtemittierenden Elemente 20, 25 sind gegenüber der zu beleuchtenden bzw. auszuleuchtenden Fläche 12 bzw. dem Zifferblatt 14 der Uhr zusätzlich parallel und/oder in einem beispielsweise kleinen Winkel zur Ebene 28 ausgerichtet, um das zu emittierende Licht parallel und/oder in einem spitzen Winkel auf die Fläche 12 bzw. das Zifferblatt 14 der Uhr abzustrahlen.

Entsprechend der Fig. 1 ergeben sich durch eine solche Anstellung der bei diesem Ausführungsbeispiel vorgesehenen 12 lichtemittierenden Elemente 20, die im randseitigen Bereich 22 der zu beleuchtenden bzw. auszuleuchtenden Fläche 12 bzw. des Zifferblattes 14 der Uhr angeordnet sind, insgesamt 12 gleichförmige elliptisch endende Lichtkegel 30, die wiederum eine gleichmäßige Be- bzw. Ausleuchtung der Fläche 12 bzw. des Zifferblattes 14 der Uhr sowohl tagsüber als auch nachts sicherstellen.

In der Fig. 3 ist schematisch eine besondere Ausführungsform der erfindungsgemäßen Anordnung 10 gezeigt, bei welcher die lichtemittierenden Elemente 20, 25 (in der Fig. 3 ist nur ein lichtemittierendes Element 20 zur besseren Übersicht gezeigt) jeweils aus lichtleitenden Fasern aus Kunststoff, Glas oder dergleichen bestehen. Das jeweils eine, lichtaufnehmende Ende 34 der lichtleitenden Fasern 32 ist mit einer Lichtquelle 36 wirksam verbunden. Das jeweils andere, zugehörige lichtabstrahlende Ende 38 der lichtleitenden Fasern 32 ist demgegenüber zur Abstrahlung des Lichtes, welches von der Lichtquelle 36 erzeugt und von der jeweiligen lichtleitenden Faser 32 übertragen wird, der zu beleuchtenden bzw. auszuleuchtenden Fläche 12 bzw. dem Zifferblatt 14 der Uhr zugeordnet.

Die Lichtquelle 36 ist bei dem in der Fig. 3 gezeigten Beispiel als Kaltlichtquelle in Form einer Halogenlampe 40 mit parabolischem Reflektor 42 ausgestaltet. Zwischen der Lichtquelle 36 und den einzelnen lichtleitenden Fasern 32 ist in vorteilhafter Weise eine Fokussiereinrichtung 44 und vorzugsweise ein Kondensor 46 zur parallelen Ausrichtung der von der Fokussiereinrichtung 44 kommenden Lichtstrahlen 48 vorgesehen. Der Kondensor 46 wiederum ist dem Anschlußstück eines Faserbündels 50 vorgeordnet, das die lichtleitenden Fasern 32 als Bündel zusammenfaßt.

Die lichtleitenden Fasern 32 sind entsprechend den Fig. 2 bis 5 bei dieser Ausführungsform der erfindungsgemäßen Anordnung 10 aus dem Faserbündel 50 kommend einzeln an die Rückseite 52 der zu beleuchtenden bzw. auszuleuchtenden Fläche 12 bzw. des Zifferblattes 14 der Uhr herangeführt, laufen durch eine Bohrung 54 in der Fläche 12 bzw. des Zifferblattes 14 hindurch und enden auf der Vorderseite 56 der Fläche 12 bzw. des Zifferblattes 14 hinter den Fixierelementen 58, beispielsweise Halteklammern, Fassungen oder dergleichen, im randseitigen Bereich 22.

Dabei ist das lichtabstrahlende Ende 38 der jeweiligen lichtleitenden Faser 32 entsprechend der Fig. 2 vorzugsweise im wesentlichen hin zum mittigen Bereich bzw. zur etwaigen Mitte 24 der Fläche 12 bzw. des Zifferblattes 14 der Uhr ausgerichtet. Um gegebenenfalls einen Lichtkegel, wie in der Fig. 1 angedeutet ist, zu erhalten, kann das lichtabstrahlende Ende 38 der jeweiligen lichtleitenden Faser 32 gegenüber der Ebene 28 der Fläche 12 bzw. des Zifferblattes 14 der Uhr unter einem Winkel angestellt sein. Ebenso ist es jedoch möglich, das lichtabstrahlende Ende 38 der jeweiligen lichtleitenden Faser 32 parallel zur Ebene 28 der Fläche 12 bzw. des Zifferblattes 14 der Uhr auszurichten und in entsprechender Weise anzufasen bzw. abzuschrägen oder mit einem sonstigen, beispielsweise prismen-, pilz- oder dergleichen -förmigen lichtbrechenden Aufsatz zu versehen.

Zum zusätzlichen und/oder hervorgehobenen Anzeigen der Informationen wirken die lichtemittierenden Elemente 20, 25 bei der Ausführungsform der erfindungsgemäßen Anordnung 10, wie in den Fig. 1 und 6 lediglich teilweise und schematisch angedeutet ist, mit Elementen 60 bzw. 62 zusammen, die auf der zu beleuchtenden bzw. auszuleuchtenden Fläche 12 bzw. dem Zifferblatt 14 der Uhr befestigt und/oder in geringem Abstand oberhalb davon bewegbar sind. Die Elemente 60 und 62 sind derart ausgebildet, daß das von den lichtemittierenden Elementen 20, 25 abgestrahlte von der Fläche 12 weg und hin zu einem Betrachter 66 ablenkbar ist. Das Licht wird dabei in aller Regel diffus in den Halbraum abgestrahlt. Ebenso kann jedoch auch eine (zumindest teilweise) gerichtete Abstrahlung des Lichtes vorgesehen sein.

Als derartige befestigte Elemente 60 können beispielsweise die Ziffern 18 der Uhr selbst oder aber zusätzliche Markierungen, wie beispielsweise Strichmarken, Dreiecke etc., entsprechend der Fig. 1 ausgestaltet sein. Als bewegte Elemente 62 hingegen können zum Beispiel die Zeiger 16 der Uhr selbst entsprechend der Fig. 6 vorgesehen sein.

Zu diesem Zweck sind die auf der zu beleuchtenden bzw. auszuleuchtenden Fläche 12 befestigten und/oder bewegten Elemente 60, 62 prismen- oder dergleichen -artig ausgebildet. Wie in der Fig. 6 gezeigt ist, ist der Zeiger 16 der Uhr geometrisch so ausgeführt, daß das zum mittigen Bereich bzw. der etwaigen Mitte 24 der Fläche 12 bzw. des Zifferblattes 14 emittierte Licht hin zum Betrachter 66 abgelenkt wird. Die Zeiger 16 können dabei aus sogenannten lichtführenden transparenten Kunststoffen bestehen, die das Licht in Richtung des Betrachters 66 abstrahlen, wenn in die hierzu senkrechten Schnittkanten Licht einfällt.

In alternativer oder kumulativer Weise können die auf der zu beleuchtenden bzw. auszuleuchtenden Fläche 12 bzw. dem Zifferblatt 14 befestigten und/oder bewegten Elemente 60, 62 auch zum Teil oder vollständig mit fluoreszierenden Materialien beschichtet sein.

Gemäß einer weiteren Ausführungsform der erfindungsgemäßen Anordnung 10 können die lichtemittierenden Elemente 20, 25 alternativ wie ebenso kumulativ auch als Leuchtdioden (LEDs) oder Glühlämpchen ausgebildet sein, die miteinander verdrahtet und über eine Stromquelle in an sich bekannter Weise mit Strom versorgbar sind (nicht im einzelnen dargestellt).

Die Anordnung gemäß der Erfindung ist nicht auf die dargestellten Ausführungsformen beschränkt. So ist es ebenfalls denkbar, die lichtemittierenden Elemente 20, 25 sämtlich oder zumindest teilweise im randseitigen Bereich 22 und/oder im mittigen Bereich bzw. der etwaigen Mitte 24 und/oder im dazwischen liegenden zentralen Bereich 26 der Fläche 12 bzw. des Zifferblattes 14 der Uhr anzuordnen und alternativ sowie kumulativ zur Abstrahlung des Lichtes hin zum mittigen Bereich bzw. der etwaigen Mitte 24 und/oder zum randseitigen Bereich 22 der Fläche 12 bzw. des Zifferblattes 14 der Uhr auszurichten. Auch ist es durchaus möglich, wenigstens eines der lichtemittierenden Elemente 20, 25 in eine davon unterschiedliche Richtung zur Abstrahlung des Lichtes einzustellen.

Schließlich besteht auch noch die grundsätzliche Möglichkeit, die lichtemittierenden Elemente 20, 25 in einer geometrischen Form anzuordnen, die von der Gestalt der zu beleuchtenden bzw. auszuleuchtenden Fläche 12 abweicht. Gedacht ist beispielsweise an eine quadratische Anordnung der lichtemittierenden Elemente 20, 25, während die Fläche 12 kreisrund oder elliptisch ausgestaltet ist, usw.

### Bezugszeichenliste

- 10: Anordnung zum Be- bzw. Ausleuchten einer Fläche
- 12: zu beleuchtende bzw. auszuleuchtende Fläche
- 14: Zifferblatt einer Uhr
- 16: Zeiger der Uhr
- 18: Ziffern der Uhr
- 20: lichtemittierendes Element
- 22: randseitiger Bereich der Fläche
- 24: mittiger Bereich der Fläche
- 25: weiteres lichtemittierendes Element
- 26: zentraler Bereich der Fläche
- 28: Ebene
- 30: Lichtkegel
- 32: lichtleitende Fasern
- 34: lichtaufnehmendes Ende einer lichtleitenden Faser
- 36: Lichtquelle
- 38: lichtabstrahlendes Ende einer lichtleitenden Faser
- 40: Halogenlampe
- 42: parabolischer Reflektor
- 44: Fokussiereinrichtung
- 46: Kondensor
- 48: Lichtstrahlen
- 50: Faserbündel
- 52: Rückseite der Fläche
- 54: Bohrung
- 56: Vorderseite der Fläche
- 58: Fixierelemente
- 60: befestigtes Element
- 62: bewegtes Element
- 64: Strichmarkierung
- 66: Betrachter

## Patentansprüche

1. Anordnung zum gleichmäßigen Be- bzw. Ausleuchten einer lichtundurchlässigen Fläche (12) zum Anzeigen von Informationen durch eine Vielzahl von lichtemittierenden Elementen (20), die in und/oder geringfügig oberhalb der Ebene (28) der zu beleuchtenden bzw. auszuleuchtenden Fläche (12) und in einem randseitigen Bereich (22) der zu beleuchtenden bzw. auszuleuchtenden Fläche (12) zueinander jeweils etwa gleich beabstandet angeordnet sind, derart, daß das abzustrahlende Licht im wesentlichen auf den mittigen Bereich (24) der zu beleuchtenden bzw. auszuleuchtenden Fläche (12) gerichtet ist und die Einbau- bzw. Gehäusetiefe der Anordnung klein ist.

2. Anordnung nach Anspruch 1, **dadurch gekennzeichnet, daß** weitere lichtemittierende Elemente (25) in einem zentralen Bereich (26) der zu beleuchtenden bzw. auszuleuchtenden Fläche (12), insbesondere zueinander jeweils etwa gleich beabstandet, angeordnet sind.

3. Anordnung nach Anspruch 1 oder 2, **dadurch gekennzeichnet, daß** die lichtemittierenden Elemente (20, 25) in auf die zu beleuchtende bzw. auszuleuchtende Fläche (12) abgestimmten Formen um den mittigen Bereich (24) der Fläche (12) angeordnet sind.

4. Anordnung nach Anspruch 3, **dadurch gekennzeichnet, daß** die lichtemittierenden Elemente (20, 25) im wesentlichen in geometrischen Formen, insbesondere in Form eines Kreises, Dreiecks, Quadrats, Vierecks oder sonstigen Polygons, einer Ellipse oder dergleichen, um den mittigen Bereich (24) der zu beleuchtenden bzw. auszuleuchtenden Fläche (12) angeordnet sind.

5. Anordnung nach einem der Ansprüche 1 bis 4, **dadurch gekennzeichnet, daß** die lichtemittierenden Elemente (20, 25) das zu emittierende Licht parallel und/oder in einem Winkel zur Ebene (28) der zu beleuchtenden bzw. auszuleuchtenden Fläche (12) auf die Fläche (12) abstrahlen.

6. Anordnung nach einem der Ansprüche 1 bis 5, **dadurch gekennzeichnet, daß** die lichtemittierenden Elemente (20, 25) jeweils als lichtleitende Fasern (32) ausgebildet sind, deren jeweiliges eine Ende (34) mit einer Lichtquelle (36) wirksam verbunden und deren jeweiliges andere Ende (38) zur Abstrahlung des von der Lichtquelle (36) erzeugten und von der lichtleitenden Faser (32) übertragenen Lichtes der zu beleuchtenden bzw. auszuleuchtenden Fläche (12) zugeordnet ist.

7. Anordnung nach Anspruch 6, **dadurch gekennzeichnet, daß** die lichtleitenden Fasern (32) aus Kunststoff, Glas oder dergleichen ausgebildet sind.

8. Anordnung nach Anspruch 6 oder 7, **dadurch gekennzeichnet, daß** das jeweilige lichtabstrahlende Ende (38) der lichtleitenden Fasern (32) angefast bzw. angeschnitten ist.

9. Anordnung nach einem der Ansprüche 6 bis 8, **dadurch gekennzeichnet, daß** die Lichtquelle (36) als Kaltlichtquelle, insbesondere als Halogenlampe (40) mit parabolischem Reflektor (42), ausgebildet ist.

10. Anordnung nach einem der Ansprüche 6 bis 9, **dadurch gekennzeichnet, daß** zwischen der Lichtquelle (36) und den lichtleitenden Fasern (32) eine Fokussiereinrichtung (44) und gegebenenfalls ein Kondensor (46) zur parallelen Ausrichtung der Lichtstrahlen (48) angeordnet ist/sind.

11. Anordnung nach einem der Ansprüche 1 bis 5, **dadurch gekennzeichnet, daß** die lichtemittierenden Elemente (20, 25) jeweils als Leuchtdiode ausgebildet sind, die mit einer Stromquelle verbunden sind.

12. Anordnung nach einem der Ansprüche 1 bis 5, **dadurch gekennzeichnet, daß** die lichtemittierenden Elemente (20, 25) jeweils als Glühlämpchen ausgebildet sind, die mit einer Stromquelle verbunden sind.

13. Anordnung nach einem der Ansprüche 1 bis 12, **dadurch gekennzeichnet, daß** die lichtemittierenden Elemente (20, 25) mit Fixierelementen (58) an der zu beleuchtenden bzw. auszuleuchtenden Fläche (12) im wesentlichen auf deren mittigen Bereich (24) ausgerichtet angebracht sind.

14. Anordnung nach einem der Ansprüche 1 bis 13, **dadurch gekennzeichnet, daß** die lichtemittierenden Elemente (20, 25) mit auf der zu beleuchtenden bzw. auszuleuchtenden Fläche (12) befestigten und/oder sich über diese bewegenden Elementen (60, 62) zum Anzeigen der Informationen zusammenwirken, die derart ausgebildet sind, daß das von den lichtemittierenden Elementen (20, 25) abgestrahlte Licht von der Fläche (12) weg ablenkbar ist.

15. Anordnung nach Anspruch 14, **dadurch gekennzeichnet, daß** die auf der zu beleuchtenden bzw. auszuleuchtenden Fläche (12) befestigten und/oder bewegten Elemente (60, 62) prismenoder dergleichen -artig ausgebildet sind.

16. Anordnung nach Anspruch 14 oder 15, **dadurch gekennzeichnet, daß** die auf der zu beleuchtenden bzw. auszuleuchtenden Fläche (12) befestigten und/oder bewegten Elemente (60, 62) aus lichtleitendem Kunststoff oder dergleichem Material bestehen.

17. Anordnung nach einem der Ansprüche 14 bis 16, **dadurch gekennzeichnet, daß** die auf der zu beleuchtenden bzw. auszuleuchtenden Fläche (12) befestigten und/oder bewegten Elemente (60, 62) wenigstens teilweise mit einem fluoreszierenden Material beschichtet sind.

18. Anordnung nach einem der Ansprüche 1 bis 17, **dadurch gekennzeichnet, daß** die zu beleuchtende bzw. auszuleuchtende Fläche (12) als Zifferblatt (14) einer Uhr ausgebildet ist.

19. Anordnung nach Anspruch 18, **dadurch gekennzeichnet, daß** die auf dem zu beleuchtenden bzw. auszuleuchtenden Zifferblatt (14) befestigten Elemente (60) als Ziffern (18), Markierungen (64), insbesondere Strichmarken, oder dergleichen und die bewegten Elemente (62) als Zeiger (16) ausgebildet sind.

## Claims

1. An array for uniformly illuminating an opaque face (12) for the display of information by a plurality of light-emitting elements (20) arranged in and/or slightly above the plane (28) of the face (12) to be illuminated and in a rim portion (22) of the face (12) to be illuminated, each roughly equispaced from the other such that the emitted light is directed substantially to the middle portion (24) of the face (12) to be illuminated and the recessed or housing depth of the array is small.

2. The array as set forth in claim 1, **characterized in that** further light-emitting elements (25) are arranged in a central portion (26) of the face (12) to be illuminated, more particularly each roughly equispaced from the other.

3. The array as set forth in claim 1 or 2, **characterized in that** the light-emitting elements (20, 25) are arranged in figures about the middle portion (24) of the face (12) adapted to the face (12) to be illuminated.

4. The array as set forth in claim 3, **characterized in that** the light-emitting elements (20, 25) are arranged substantially in the shape of geometrical figures, more particularly as a circle, traingle, square, rectangle or other polygon, an ellipse or the like about the middle portion (24) of the face (12) to be illuminated.

5. The array as set forth in any of the claims 1 to 4, **characterized in that** the light-emitting elements (20, 25) emit the light parallel to and/or at an angle to the plane (28) of the face (12) to be illuminated.

6. The array as set forth in any of the claims 1 to 5, **characterized in that** each of the light-emitting elements (20, 25) is configured as an optical fiber (32) whose one end (34) is connected to a light source (36) and whose other end (38) for emitting the light generated by the light source (36) and communicated by the optical fiber (32) is assigned to the face (12) to be illuminated.

7. The array as set forth in claim 6, **characterized in that** the optical fibers (32) are made of plastics, glass or the like.

8. The array as set forth in claim 6 or 7, **characterized in that** each light-emitting end (38) of the optical fibers (32) is chamfered or bevelled.

9. The array as set forth in any of the claims 6 to 8, **characterized in that** the light source (36) is configured as a cold light source, more particularly as a halogen lamp (40) having a parabolic reflector (42).

10. The array as set forth in any of the claims 6 to 9, **characterized in that** between the light source (36) and the optical fibers (32) a focussing means (44) and, where necessary, a condensor (46) for parallel alignment of the light rays (48) is/are arranged.

11. The array as set forth in any of the claims 1 to 5, **characterized in that** each light-emitting element (20, 25) is configured as a light-emitting diode connected to a power supply.

12. The array as set forth in any of the claims 1 to 5, **characterized in that** each light-emitting element (20, 25) is configured as a jewel light connected to a power supply.

13. The array as set forth in any of the claims 1 to 12, **characterized in that** the light-emitting elements (20, 25) are mounted by locating elements (58) at the face (12) to be illuminated oriented substantially to the middle portion (24) thereof.

14. The array as set forth in any of the claims 1 to 13, **characterized in that** the light-emitting elements (20, 25) cooperate with elements (60, 62) secured to the face (12) to be illuminated and/or moving above thereof for the display of the information, having a configuration such that the light emitted from the light-emitting elements (20, 25) is directed away from the face (12).

15. The array as set forth in claim 14, **characterized in that** the elements (60, 62) secured to and/or moved on the face (12) to be illuminated are configured prismatic or the like.

16. The array as set forth in claim 14 or 15, **characterized in that** the elements (60, 62) secured to and/or moved on the face (12) to be illuminated are made of light-conductive plastics or a like material.

17. The array as set forth in any of the claims 14 to 16, **characterized in that** the elements (60, 62) secured to and/or moved on the face (12) to be illuminated are coated at least in part with a fluorescent material.

18. The array as set forth in any of the claims 1 to 17, **characterized in that** the face (12) to be illuminated is configured as a clock dial (14).

19. The array as set forth in claim 18, **characterized in that** the elements (60) secured on the clock dial (14) to be illuminated are configured as numerals (18), markings (64), more particularly index marks, or the like and the moved elements (62) are configured as hands (16).

## Revendications

1. Agencement pour l'éclairage, respectivement l'illumination uniforme d'une surface opaque (12) pour l'affichage d'informations par l'intermédiaire d'une pluralité d'éléments électroluminescents (20) qui sont disposés dans et/ou légèrement au-dessus du plan (28) de la surface à éclairer, respectivement à illuminer et de manière sensiblement équidistante les uns aux autres dans une zone en bordure (22) de la surface à éclairer, respectivement à illuminer (12), de façon que la lumière à rayonner soit dirigée sensiblement vers la zone de milieu (24) de la surface à éclairer, respectivement à illuminer (12) et que la profondeur d'encastrement, respectivement de boîtier de l'agencement soit faible.

2. Agencement selon la revendication 1, **caractérisé en ce que** des éléments électroluminescents supplémentaires (25) sont disposés, en particulier de manière sensiblement équidistante les uns aux autres, dans une zone centrale (26) de la surface à éclairer, respectivement à illuminer (12).

3. Agencement selon la revendication 1 ou 2, **caractérisé en ce que** les éléments électroluminescents (20, 25) sont disposés autour de la zone de milieu (24) de la surface (12) dans des formes adaptées à la surface à éclairer, respectivement à illuminer (12).

4. Agencement selon la revendication 3, **caractérisé en ce que** les éléments électroluminescents (20, 25) sont disposés pour l'essentiel selon des formes géométriques, en particulier en forme de cercle, de triangle, de carré, de rectangle ou de polygone quelconque, d'ellipse ou analogue, autour de la zone de milieu (24) de la surface à éclairer, respectivement à illuminer (12).

5. Agencement selon l'une des revendications 1 à 4, **caractérisé en ce que** les éléments électroluminescents (20, 25) rayonnent la lumière à émettre sur la surface (12) parallèlement et/ou selon un angle par rapport au plan (28) de la surface à éclairer, respectivement à illuminer (12).

6. Agencement selon l'une des revendications 1 à 5, **caractérisé en ce que** les éléments. électroluminescents (20, 25) sont conçus chacun sous la forme de fibres optiques (32) dont l'une des extrémités respectives (34) est reliée efficacement à une source lumineuse (36) et dont l'autre extrémité respective (38) est associée à la surface à éclairer, respectivement à illuminer (12) pour rayonner la lumière produite par la source lumineuse (36) et transmise par la fibre optique (32).

7. Agencement selon la revendication 6, **caractérisé en ce que** les fibres optiques (32) sont réalisées en matière plastique, verre ou analogue.

8. Agencement selon la revendication 6 ou 7, **caractérisé en ce que** l'extrémité de rayonnement lumineux respective (38) des fibres optiques (32) est biseautée, respectivement entaillée.

9. Agencement selon l'une des revendications 6 à 8, **caractérisé en ce que** la source lumineuse (36) est conçue sous la forme d'une source de lumière froide, en particulier d'une lampe halogène (40) avec réflecteur parabolique (42).

10. Agencement selon l'une des revendications 6 à 9, **caractérisé en ce qu'**entre la source lumineuse (36) et les fibres optiques (32) est/sont disposé(s) un dispositif de focalisation (44) et le cas échéant un condenseur (46) pour l'orientation parallèle des rayons lumineux (48).

11. Agencement selon l'une des revendications 1 à 5, **caractérisé en ce que** les éléments électroluminescents (20, 25) sont conçus chacun sous la forme d'une diode électroluminescente qui est connectée à une source de courant.

12. Agencement selon l'une des revendications 1 à 5, **caractérisé en ce que** les éléments électroluminescents (20, 25) sont conçus chacun sous la forme d'une petite lampe à incandescence qui est connectée à une source de courant.

13. Agencement selon l'une des revendications 1 à 12, **caractérisé en ce que** les éléments électroluminescents (20, 25) sont disposés avec des éléments de fixation (58) sur la surface à éclairer, respectivement à illuminer (12) en étant orientés pour l'essentiel vers la zone de milieu (24) de celle-ci.

14. Agencement selon l'une des revendications 1 à 13, **caractérisé en ce que** les éléments électroluminescents (20, 25) coopèrent avec des éléments (60, 62) qui sont fixés sur la surface à éclairer, respectivement à illuminer (12) et/ou se déplacent sur celle-ci pour l'affichage des informations et qui sont conçus de façon que la lumière rayonnée par les éléments électroluminescents (20, 25) puisse être déviée de la surface (12).

15. Agencement selon la revendication 14, **caractérisé en ce que** les éléments (60, 62) fixés et/ou déplacés sur la surface à éclairer, respectivement à illuminer (12) sont conçus sous la forme de prismes ou analogue.

16. Agencement selon la revendication 14 ou 15, **caractérisé en ce que** les éléments (60, 62) fixés et/ou déplacés sur la surface à éclairer, respectivement à illuminer (12) sont constitués de matière plastique conduisant la lumière ou de matériau analogue.

17. Agencement selon l'une des revendications 14 à 16, **caractérisé en ce que** les éléments (60, 62) fixés et/ou déplacés sur la surface à éclairer, respectivement à illuminer (12) sont revêtus au moins partiellement d'un matériau fluorescent.

18. Agencement selon l'une des revendications 1 à 17, **caractérisé en ce que** la surface à éclairer, respectivement à illuminer (12) est conçue sous la forme d'un cadran (14) d'une horloge.

19. Agencement selon la revendication 18, **caractérisé en ce que** les éléments (60) fixés sur le cadran à éclairer, respectivement à illuminer (14) sont conçus sous la forme de chiffres (18), de repères (64), en particulier de traits de repère, ou analogues et les éléments déplacés (62) sont conçus sous la forme d'aiguilles (16).
